# EUROPÄISCHE PATENTANMELDUNG

(11) **EP 2 341 272 A1**
(43) Veröffentlichungstag der Anmeldung: **06.07.2011**
(21) Anmeldenummer: 10196916.0
(22) Anmeldetag: 23.12.2010
(51) Int. Cl.: F16L 25/00, F16L 33/26, F16L 11/15

(54) **Anordnung zur Abdichtung einer Nippelverbindung**

(30) Priorität: 05.01.2010 CH 52010
(71) Anmelder: Jumo Mess-Und Regeltechnik AG, 8712 Stäfa (CH)
(72) Erfinder: Widmer, Adolf, 8733, Eschenbach (CH); Wüest, Walter Alois, 8712, Stäfa (CH)
(74) Vertreter: Troesch Scheidegger Werner AG

(57) **Zusammenfassung**

Die vorliegende Erfindung betrifft eine Anordnung zur Abdichtung einer Nippelverbindung (1) mit einem Nippel (2), wobei der Nippel (2) mit einem Wellschlauch (3) verbunden ist, und wobei Rillen (4; 4'; 4'') des Wellschlauches (3) in einem Bereich der Nippelverbindung (1) mindestens einen O-Ring (6) aufweisen.

## Beschreibung

Die vorliegende Erfindung betrifft eine Anordnung zur Abdichtung einer Nippelverbindung nach dem Oberbegriff von Anspruch 1.

Derartige Anordnungen zur Abdichtung einer Nippelverbindung können beispielsweise bei elektrotechnischen Anlagen oder Geräten zur Erreichung eines IP-Schutzgrades von mindestens 65 zum Einsatz kommen, um ein zuverlässiges Funktionieren auch unter erschwerten Umweltbedingungen (z.B. bei Gefahr vor Staubablagerung, Staubeintritt, Strahlwasser, Untertauchen in Wasser) sicherzustellen.

Eine Aufgabe der vorliegenden Erfindung bestand darin, eine dichte Anordnung zur Abdichtung einer Nippelverbindung bereitzustellen.

Die Aufgabe wird durch die Merkmalskombination von Anspruch 1 gelöst. Weitere Ausführungsformen sind in den von Anspruch 1 abhängigen Ansprüchen dargestellt.

Vorgeschlagen wird eine Anordnung zur Abdichtung einer Nippelverbindung mit einem Nippel, wobei der Nippel mit einem Wellschlauch verbunden ist. Dabei weisen Rillen des Wellschlauches in einem Bereich der Nippelverbindung mindestens einen 0-Ring auf. Durch die erfindungsgemässe Anordnung wird eine dichte Abdichtung erreicht, welche gleichzeitig mechanisch stabil und kostengünstig ist.

Eine erfindungsgemässe Ausführungsform ist, dass der O-Ring zwischen einer Innenseite der Rille jeweils in einer Rillenvertiefung und einer Nippelhülse angeordnet ist. Eine weitere erfindungsgemässe Ausführungsform ist, dass die erste und/oder zweite Rille den 0-Ring aufweist.

Eine weitere erfindungsgemässe Ausführungsform ist, dass der 0-Ring aus Kunststoff ist.

Eine weitere erfindungsgemässe Ausführungsform ist, dass ein Basiskörper eine Rillenstruktur oder eine Randrierung oder eine aufgeraute Struktur aufweist. Dadurch wird ein Verdrehschutz des Wellschlauches bewirkt.

Eine noch weitere erfindungsgemässe Ausführungsform ist, dass mindestens im Bereich der Nippelverbindung ein Schrumpfschlauch oder ein gespritztes Kunststoffteil oder eine Metallhülse das Wellrohr an seiner Aussenseite umschliesst.

Eine weitere erfindungsgemässe Ausführungsform ist, dass der O-Ring an einer Aussenseite der Rille in einer weiteren Rillenvertiefung angeordnet ist.

Eine weitere erfindungsgemässe Ausführungsform ist, dass der Nippel aus Kunststoff oder Metall ist.

Eine weitere erfindungsgemässe Ausführungsform ist, dass der Wellschlauch aus Kunststoff oder aus Metall ist.

Ausführungsbeispiele der vorliegenden Erfindung werden nachstehend anhand von Figuren noch näher erläutert. Es zeigen
- Fig. 1: eine erste erfindungsgemässe Anordnung zur Abdichtung einer Nippelverbindung;
- Fig. 2: eine zweite erfindungsgemässe Anordnung zur Abdichtung einer Nippelverbindung;

- Fig. 3: eine dritte erfindungsgemässe Anordnung zur Abdichtung einer Nippelverbindung;
- Fig. 4: eine vierte erfindungsgemässe Anordnung zur Abdichtung einer Nippelverbindung;
- Fig. 5: eine fünfte erfindungsgemässe Anordnung zur Abdichtung einer Nippelverbindung;
- Fig. 6: eine sechste erfindungsgemässe Anordnung zur Abdichtung einer Nippelverbindung; und
- Fig. 7: eine siebte erfindungsgemässe Anordnung zur Abdichtung einer Nippelverbindung.

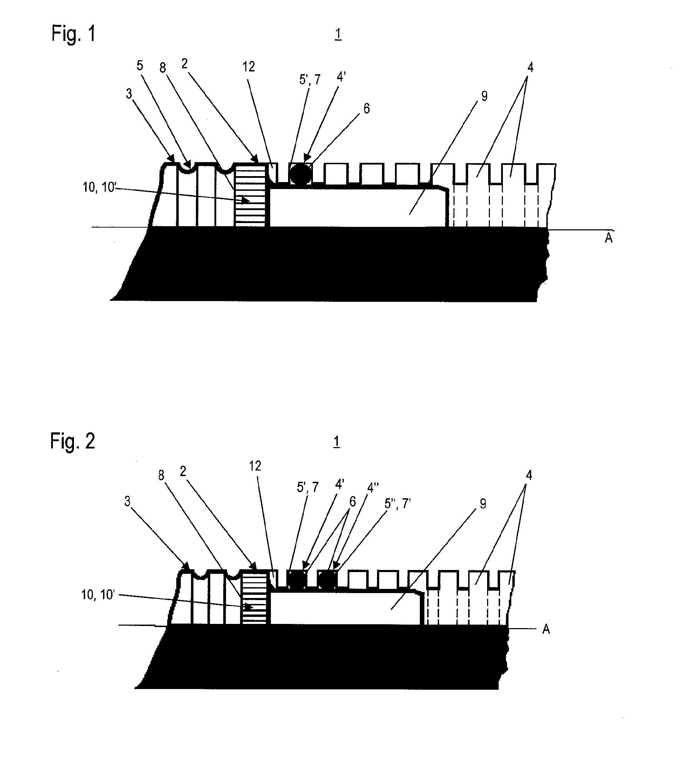

In Figur 1 ist eine erste erfindungsgemässe Anordnung zur Abdichtung einer Nippelverbindung 1 mit einem Nippel 2, wobei der Nippel 2 mit einem (als 1/4 Schnitt dargestellter) Wellschlauch 3, welcher Rillen 4 aufweist, verbunden ist. Die Rillen 4 umlaufen den Wellschlauch 3 und weisen bogenförmige oder eckig ausgebildete Rillenvertiefungen 5 auf. Die Rillen 4 sind senkrecht in Bezug auf eine horizontale Achse A ausgebildet. Der Nippel 2 kann dabei aus Kunststoff oder Metall sein. Der Wellschlauch 3 weist in einem Bereich der Nippelverbindung 1 einen 0-Ring 6 auf. Der 0-Ring 6 ist dabei zwischen einer Innenseite 7 einer ersten Rille 4', welche im Anschluss an ein Nippelende 8 mit einer daran anschliessenden Nippelhülse 9 in einer ersten Rillenvertiefung 5' angeordnet. Dabei ist im Anschluss an den Basiskörper 10 eine Halb-Rille 12 des Wellschlauches 3 dargestellt, wobei die Halb-Rille 12 den Basiskörper 10 überragt. Der O-Ring 6 ist dabei aus Kunststoff ausgebildet. Die Nippelhülse 9 und ein daran anschliessendes Basiskörper 10 bilden den Nippel 2. Das Basiskörper 10 weist im Vergleich zur Nippelhülse 9 einen breiteren Durchmesser auf. Die Oberfläche 10' des Basiskörpers 10 ist mit einer Rillenstruktur oder einer Randrierung, z.B. in Form einer Kreuzrandrierung, oder einer aufgerauten Struktur ausgebildet. Dadurch wird erreicht, der Wellschlauch 3 nicht um den Nippel 2 verdrehbar ist. Es ist auch denkbar, dass die Oberfläche 10' des Basiskörpers 10 glatt ausgebildet ist. Dadurch wird erreicht, dass bei voller Dichtheit der Wellschlauch 3 um den Nippel 2 drehbar ist.

In Figur 2 ist eine zweite erfindungsgemässe Anordnung zur Abdichtung einer Nippelverbindung 1 dargestellt. Im Unterschied zu Figur 1 sind zwei 0-Ringe 6 an der Innenseite 7 der ersten Rille 4' und an der Innenseite 7' einer zweiten Rille 4" in der entsprechenden ersten Rillenvertiefung 5' bzw. zweiten Rillenvertiefung 5" angeordnet.

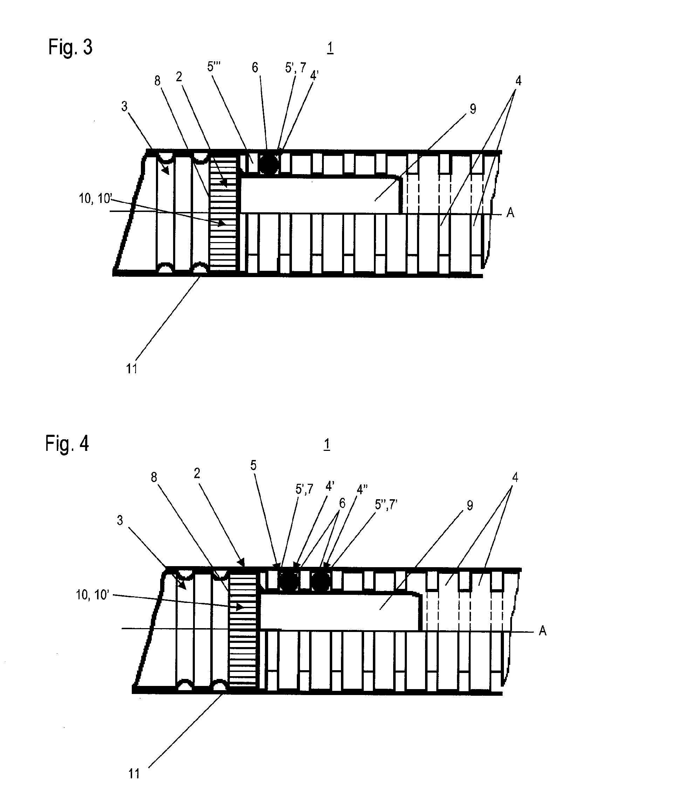

In Figur 3 ist eine dritte erfindungsgemässe Anordnung zur Abdichtung einer Nippelverbindung 1 dargestellt. Dabei ist ein Schrumpfschlauch 11 unterhalb der Achse A als 1/2 Schnitt und oberhalb der Achse A als 1/4 Schnitt in Figur 3 dargestellt. Wie bei Figur 1 ist der 0-Ring 6 an der Innenseite 7 der ersten Rille 4' in der ersten Rillenvertiefung 5' an der Innenseite des Wellschlauchs 3 angeordnet. Es ist auch denkbar, den 0-Ring 6 anstelle an der Innenseite 7 in der Rillenvertiefung 5 der ersten Rille 4', den 0-Ring 6 an einer Aussenseite des Wellschlauchs 3 in einer weiteren Rillenvertiefung 5''' anzuordnen. In diesem Fall ist der O-Ring 6 zwischen dem Schrumpfschlauch

11 und der weiteren Rillenvertiefung 5''' an der Aussenseite des Wellschlauches 3 angeordnet. Der Schrumpfschlauch 11 umschliesst den Wellschlauch 3, welcher aus Kunststoff oder Metall ist. Es ist auch denkbar, dass anstelle eines Schrumpfschlauches 11 ein gespritztes zylindrisches Kunststoffteil oder eine Metallhülse den Wellschlauch 3 mindestens im Bereich der Nippelverbindung 1 umschliesst.

In Figur 4 ist eine vierte erfindungsgemässe Anordnung zur Abdichtung einer Nippelverbindung 1 dargestellt. Dabei ist der Schrumpfschlauch 11 unterhalb einer Achse A als 1/2 Schnitt und oberhalb der Achse A als 1/4 Schnitt in Figur 4 dargestellt. Wie bei Figur 2 sind die zwei 0-Ringe 6 zwischen der Innenseite 7 der ersten Rille 4' und der zweiten Rille 4" angeordnet.

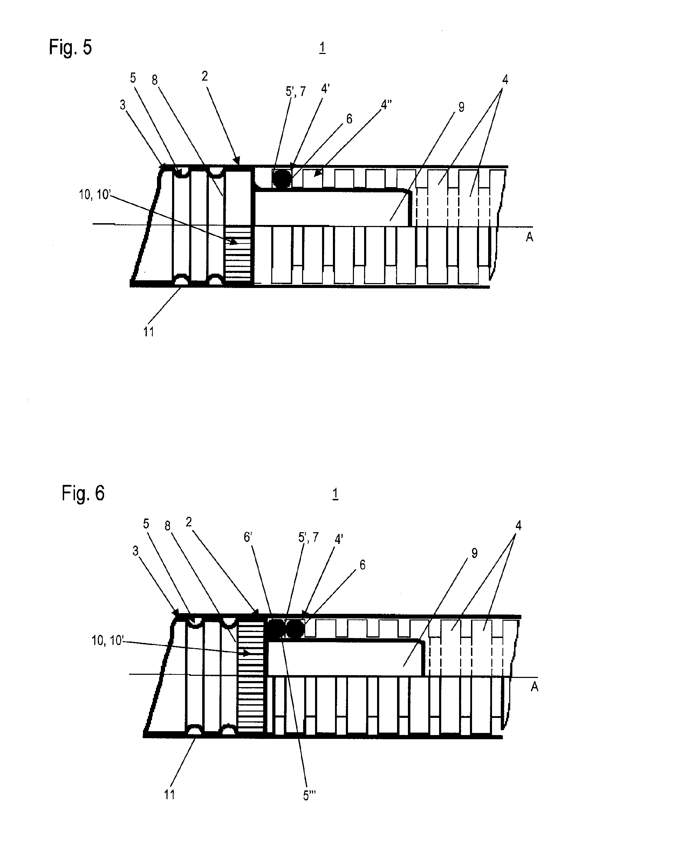

In Figur 5 ist eine fünfte erfindungsgemässe Anordnung zur Abdichtung einer Nippelverbindung 1 dargestellt. Der Unterschied zu dem in Figur 3 dargestellten Ausführungsbeispiels ist, dass der 0-Ring 6 an der Innenseite 7 der ersten ganzen Rille 4', welche im Anschluss an den Basiskörper 10 folgt, angeordnet ist. Im Gegensatz zum Ausführungsbeispiel von Figur 1, weist das Ausführungsbeispiel von Figur 5 keine Halb-Rille 12 auf. Es ist auch denkbar, dass mindestens ein weiterer O-Ring in der zweiten Rille 4" oder noch weiteren der Rillen 4 angeordnet sind. Es ist auch denkbar, das in Figur 5 dargestellte Ausführungsbeispiel ohne den Schrumpfschlauch 11 auszuführen. Weiter weist die Oberfläche 10' des Basiskörpers 10 von nur teilweise eine Randrierung auf.

In Figur 6 ist eine sechste erfindungsgemässe Anordnung zur Abdichtung einer Nippelverbindung dargestellt. Der Unterschied zu den Figuren 1 bis 5 ist, dass ein weiterer 0-Ring 6' in der ersten Rillenvertiefung 5''' an der Aussenseite des Wellschlauchs 3 unmittelbar vor der ersten 0-Ring 6 angeordnet ist. Auch hier ist eine Ausführung ohne Schrumpfschlauch 11 denkbar. Weiter kann ein weiterer 0-Ring 6 an der Innenseite 7' der weiteren Rille 4' angeordnet werden.

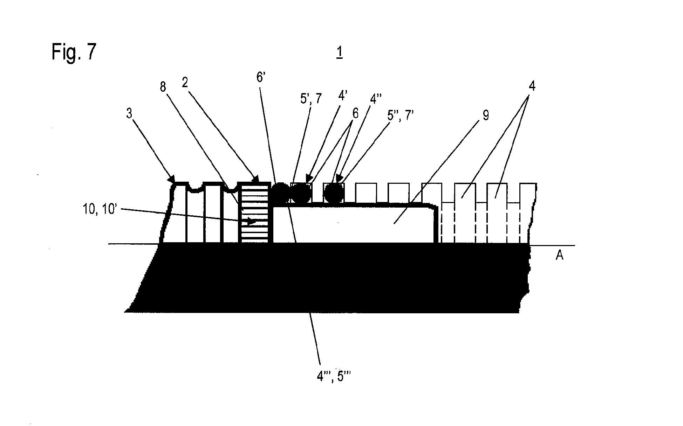

In Figur 7 ist eine siebte erfindungsgemässe Anordnung zur Abdichtung der Nippelverbindung 1 mit dem Nippel 2, wobei der Nippel 2 mit dem (als 1/4 Schnitt dargestellter) Wellschlauch 3, welcher Rillen 4 aufweist, verbunden ist. Das in Figur 7 dargestellte Ausführungsbeispiel entspricht im Wesentlichen dem Ausführungsbeispiel von Figur 1 mit dem Unterschied, dass in Figur 7 der weitere O-Ring 6' in der Rillenvertiefung 5''' der Rille 4''' an der Aussenseite des Wellschlauchs 3 angeordnet ist. Weiter sind der erste sowie der zweite 0-Ring 6 im Anschluss an die Rille 4''' an der Innenseite der ersten Innenrille 4' bzw. der zweiten Innenrille 4" in der entsprechenden Rillenvertiefung 5', 5" des Wellschlauchs 3 angeordnet. Es ist auch denkbar, das Ausführungsbeispiel von Figur 7 mit einem Schrumpfschlauch auszuführen, welcher den Wellschlauch 3 mindestens im Bereich der Nippelverbindung 1 umschliesst.

Bei allen oben beschriebenen in den Figuren 1 bis 7 beschriebenen Ausführungsbeispielen erstreckt sich die Länge der Nippelhülse 9 mindestens über einen Abschnitt des Wellschlauches 3, welcher die zwei Rillen 4', 4" mit mindestens einem O-Ring 6 aufweist, welche im Anschluss an das Basiskörpers 10 des Nippels 2 folgen. Die Nippelhülse 9 kann beispielsweise eine Länge zwischen 20 bis 30 mm aufweisen.

## Patentansprüche

1. Anordnung zur Abdichtung einer Nippelverbindung (1) mit einem Nippel (2), wobei der Nippel (2) mit einem Wellschlauch (3) verbunden ist, **dadurch gekennzeichnet, dass** Rillen (4; 4'; 4"; 4''') des Wellschlauches (3) in einem Bereich der Nippelverbindung (1) mindestens einen 0-Ring (6) aufweisen.

2. Anordnung nach Anspruch 1, **dadurch gekennzeichnet, dass** der 0-Ring (6) zwischen einer Innenseite (7; 7') der Rille (4; 4'; 4'' ; 4''') jeweils in einer Rillenvertiefung (5; 5' ; 5'' ) an einer Innenseite der Rille (4; 4'; 4'' ) und einer Nippelhülse (9) angeordnet ist.

3. Anordnung nach Anspruch 1 oder 2, **dadurch gekennzeichnet, dass** die erste und/oder zweite Rille (4'; 4") den 0-Ring (6) aufweist.

4. Anordnung nach einem der Ansprüche 1 bis 3, **dadurch gekennzeichnet, dass** der O-Ring (6) aus Kunststoff ist.

5. Anordnung nach einem der Ansprüche 1 bis 4, **dadurch gekennzeichnet, dass** ein Basiskörper (10) eine Rillenstruktur oder eine Randrierung oder eine aufgeraute Struktur aufweist.

6. Anordnung nach einem der Ansprüche 1 bis 5, **dadurch gekennzeichnet, dass** mindestens im Bereich der Nippelverbindung (1) ein Schrumpfschlauch (11) oder ein gespritztes Kunststoffteil oder eine Metallhülse das Wellrohr (3) an seiner Aussenseite umschliesst.

7. Anordnung nach Anspruch 6, **dadurch gekennzeichnet, dass** der 0-Ring (6) an einer Aussenseite einer Rille (4; 4'; 4'' ) in einer weiteren Rillenvertiefung angeordnet ist.

8. Anordnung nach einem der Ansprüche 1 bis 7, **dadurch gekennzeichnet, dass** der Nippel (2) aus Kunststoff oder Metall ist.

9. Anordnung nach einem der Ansprüche 1 bis 8, **dadurch gekennzeichnet, dass** der Wellschlauch (3) aus Kunststoff oder aus Metall ist.
